# FASCICULE DE BREVET EUROPEEN

(11) **EP 2 228 547 B1**
(45) Date de publication et mention de la délivrance du brevet: **24.08.2011**
(21) Numéro de dépôt: 10156187.6
(22) Date de dépôt: 11.03.2010
(51) Int. Cl.: F16B 5/06, F16B 5/12

(54) **Clip de fixation à deux positions stables de maintien pour baguette, se montant par poussée perpendiculaire à la baguette.**
Clip zum Fixieren in zwei stabilen Haltepositionen für eine Leiste, der durch senkrechten Schub zur Leiste montiert wird
Attachment clip with two stable holding positions for a rod, mounted by pushing perpendicular to the rod

(30) Priorité: 11.03.2009 FR 0901128
(43) Date de publication de la demande: 15.09.2010
(73) Titulaire: Rehau SA, 57340 Morhange (FR)
(72) Inventeur: Haudry, Philippe, 57670 Lening (FR)
(74) Mandataire: Metz, Paul

(56) Documents cités:
- FR-A- 2 839 481
- FR-A- 2 887 598
- FR-A- 2 904 384
- US-A- 4 176 428

## Description

La présente invention concerne un clip de fixation à deux positions de maintien, formé d'un élément support rapporté sur la face intérieure d'un élément linéaire ou moulé d'une pièce avec celle-ci et d'un manchon d'accrochage à la carrosserie. Ce clip de fixation est destiné principalement aux baguettes, moulures, enjoliveurs de ceinture de caisse ou de bas de caisse pour véhicules routiers notamment du type automobile.

L'invention se rapporte également à une baguette de protection ou d'enjolivement ou à tout autre élément linéaire à rapporter sur la carrosserie d'un véhicule routier notamment du type automobile, comportant de tels clips de fixation à deux positions.

Les baguettes de protection ou d'enjolivement de ce type sont des pièces en matière plastique réalisées par moulage par injection, conçues pour être montées fixes sur la carrosserie d'un véhicule.

Dans la pratique actuelle, ces baguettes de protection ou d'enjolivement sont peintes après moulage, sur leur lieu de fabrication ou chez un sous-traitant au moyen d'une ligne spécifique de mise en peinture.

Les baguettes sont alors livrées finies sur le site d'assemblage où elles sont montées sur la carrosserie des véhicules, préalablement traitée et peinte de manière indépendante.

Cette façon de faire est particulièrement onéreuse, car elle nécessite une opération de peinture indépendante de celle de la carrosserie et une logistique importante pour la mettre en oeuvre et pour fournir dans le bon ordre, des baguettes de la bonne couleur, au niveau de la chaîne d'assemblage.

En outre, il arrive parfois que, malgré une opération préalable, longue et délicate, de mise au point et d'harmonisation des teintes, la baguette et la carrosserie, qui sont peintes séparément et selon des techniques différentes, présentent des légères variations de teinte qui ne sont plus acceptables par les constructeurs automobiles. De tels écarts peuvent provenir, par exemple, de faibles différences d'épaisseur des couches de peinture ou de l'emploi de gammes de peinture spécifiques pas exactement identiques.

Le but de l'invention est de proposer une baguette de protection, d'enjolivement ou autre qui peut être montée sur la carrosserie avant que cette dernière ne subisse les différentes opérations de mise en peinture. La baguette peut ainsi être peinte en même temps que la carrosserie sur laquelle elle est montée.

Un tel procédé est nettement plus économique, car il supprime la nécessité d'une ligne spécifique supplémentaire de mise en peinture pour les baguettes. De plus, il assure une parfaite harmonie des teintes entre la carrosserie et la baguette.

Tout comme d'autres éléments, notamment le portillon de la trappe à carburant et éventuellement les ailes du véhicule, la baguette peut être montée sur la carrosserie après le traitement anti-corrosion de celle-ci par cataphorèse, mais avant les opérations de mise en peinture de finition (base métallisée ou laque, puis vernis) qui sont préférentiellement réalisées par pulvérisation électrostatique.

Bien que cela ne corresponde pas à la variante préférentielle, il est également envisageable de monter la baguette de l'invention sur la carrosserie avant les opérations de traitement anti-corrosion par cataphorèse.

Par sa présence, la baguette ne doit pas gêner les différentes opérations de mise en peinture de la carrosserie, notamment sur la partie de carrosserie se trouvant à proximité de la baguette ou à l'arrière de celle-ci.

Pour cela, la baguette doit pouvoir être prémontée fixe sur la carrosserie à une certaine distance de celle-ci de manière que la baguette, ainsi que sensiblement toute la surface de la carrosserie puissent être revêtues de peinture, de laque et/ou de vernis.

Par sa conception originale, la baguette selon l'invention permet avantageusement un prémontage avec une grande distance d'éloignement par rapport à la carrosserie. Cette distance d'éloignement est préférentiellement de l'ordre de 8 mm, ce qui est nettement supérieur aux distances d'éloignement obtenues avec les baguettes à deux positions de l'art antérieur.

En position écartée de prémontage, la baguette selon l'invention est très éloignée de la carrosserie et est ainsi peu gênante lors des opérations de peinture de la carrosserie.

Une telle baguette à deux positions doit être capable de supporter sans détérioration les conditions de la mise en peinture de la carrosserie, ce qui implique notamment un passage au four à une température de l'ordre de 170°C.

Elle doit ensuite pouvoir être placée facilement et rapidement en position finale d'utilisation, c'est-à-dire plaquée contre la carrosserie, avec un maintien suffisant pour résister aux conditions de roulage et aux efforts mécaniques divers auxquels elle peut être exposée par la suite, par exemple le frottement de rouleaux de lavage.

Par la demande FR 2.839.481 au nom d'ARIES, on connaît une baguette pour carrosserie de véhicule automobile qui répond à ce problème technique. Sur sa face interne, cette baguette comporte d'une part deux organes de prémontage coopérant avec des orifices spécifiques de la carrosserie qui permettent de maintenir la baguette dans une position écartée de prémontage. Elle comporte d'autre part une série de clips de blocage, coopérant avec un autre type d'orifices de la carrosserie, de manière à assurer la fixation de la baguette en position finale de verrouillage contre la carrosserie après avoir subi une poussée perpendiculaire au support.

Les deux organes de prémontage de cette réalisation antérieure sont formés chacun d'une pièce d'emboîtement préalablement mise en place sur l'orifice correspondant de la carrosserie, et d'une seconde pièce cylindrique rattachée à la baguette, susceptible de coulisser dans la pièce d'emboîtement et comportant en extrémité un ergot destiné à coopérer avec un creux de la pièce d'emboîtement.

Pour monter cette baguette en position écartée, l'opérateur insère la partie cylindrique de chacun des organes de prémontage dans la pièce d'emboîtement correspondante et exerce sur la baguette une poussée perpendiculaire à la carrosserie, dite « en Y » jusqu'à ce que l'ergot des parties cylindriques se bloque dans les creux correspondants des deux pièces d'emboîtement.

Une fois les opérations de peinture terminées, l'opérateur exerce une seconde poussée perpendiculaire à la carrosserie qui provoque la sortie des ergots de prémontage hors de leur logement et l'insertion des clips de blocage dans les orifices correspondants de la carrosserie, de manière à placer la baguette en position finale d'utilisation plaquée contre la carrosserie.

Une telle réalisation permet de répondre au problème technique. Cependant, pour placer la baguette en position écartée de prémontage, puis pour la mettre en position plaquée d'utilisation, l'opérateur doit effectuer dans les deux cas un mouvement de même nature : une poussée « en Y » perpendiculaire à la carrosserie.

Lors du prémontage, l'opérateur doit doser son effort de poussée pour que les parties cylindriques des organes de prémontage ne coulissent pas trop loin dans les pièces d'emboîtement et que les ergots des parties cylindriques ne dépassent pas leur position de réception dans les creux des pièces d'emboîtement.

Cette opération étant relativement délicate et menée à une cadence très rapide, il arrive que certaines baguettes se retrouvent trop près de la carrosserie et gênent ensuite les opérations de traitement et de peinture de la zone de carrosserie située derrière.

Le but de l'invention est de fournir une autre solution, plus avantageuse, pour résoudre ce problème technique.

On connaît également les clips bien plus avantageux divulgués dans les demandes de brevet antérieures FR 2.887.598, FR 2.904.383, FR 2.904.384 et FR 2.911.646 au nom de REHAU SA.

Ces clips sont formés de deux parties : un élément de base rapporté ou moulé d'une pièce avec la face arrière de la baguette et un élément d'accrochage comportant une tête de clip conçue pour coopérer avec une ouverture de la carrosserie en forme de « trou de serrure ». Selon les modèles, l'élément d'accrochage est indépendant ou réalisé d'une pièce avec l'élément de base, mais il présente dans tous les cas deux positions de montage sur la pièce de base à deux hauteurs différentes grâce à une structure d'encliquetage à deux crans.

La baguette comporte plusieurs de ces clips répartis sur toute sa longueur. Elle est placée en position écartée de prémontage, par engagement de la tête des clips dans la partie large des ouvertures de la carrosserie puis par un coulissement longitudinal « en X » de la baguette faisant passer les clips dans la partie étroite des ouvertures.

Après traitement et/ou peinture, l'opérateur exerce une poussée « en Y » perpendiculaire à la carrosserie sur la baguette pour la plaquer en position finale d'utilisation.

Avec de tels clips, deux mouvements différents sont nécessaires pour placer la baguette en position écartée de prémontage (coulissement en X) et en position plaquée finale d'utilisation (poussée en Y), ce qui limite les risques d'erreur de la part de l'opérateur.

Cependant, ces clips à deux positions présentent encore certains inconvénients.

D'abord, du fait de la structure de ces clips antérieurs, la baguette reste toujours à proximité de la carrosserie et ce même en position écartée de prémontage. La distance d'éloignement entre la baguette et la carrosserie, pouvant être obtenue avec de tels clips est limitée à une valeur voisine de 2 mm. En position écartée de prémontage, la baguette est tout près de la carrosserie et peut perturber les opérations de peinture de la carrosserie réalisées à ce niveau.

En outre, ces clips de l'art antérieur ne peuvent être utilisés que si la carrosserie présente des ouvertures de montage en forme de « trou de serrure » et nécessitent pour leur montage, après engagement de leur tête de clip dans la partie large des ouvertures, un mouvement de coulissement longitudinal « en X » de la baguette.

Or, les clips à monter par coulissement longitudinal dans des ouvertures en forme de « trou de serrure » sont de moins en moins utilisés par les constructeurs automobiles, car le mouvement de coulissement longitudinal « en X » de la baguette requiert un effort relativement important de la part de l'opérateur qui doit vaincre la résistance au glissement de l'ensemble des clips.

Pour simplifier le processus de pose des baguettes, les constructeurs leur préfèrent maintenant les clips se montant par poussée transversale « en Y » dans des ouvertures de forme adaptée, par exemple circulaire, qui sont moins pénibles à mettre en place.

Les clips à deux positions divulgués dans les brevets antérieurs REHAU ne sont donc pas compatibles avec ces nouvelles exigences.

Le but de l'invention est de fournir un autre clip à deux positions, se montant par poussée transversale à la carrosserie et étant compatible avec d'autres clips classiques à monter par poussée transversale pouvant équiper la baguette, le clip selon l'invention ne présentant pas les inconvénients du clip ARIES antérieur.

Pour résoudre ce problème technique, l'invention fournit un clip de fixation à deux positions de maintien, destiné à assurer la fixation sur la carrosserie à peindre d'un véhicule routier notamment du type automobile, d'un élément linéaire décoratif ou fonctionnel, par exemple du type baguette, bande, moulure, enjoliveur de ceinture de caisse ou de bas de caisse.

Selon l'invention, ce clip de fixation comprend un élément support moulé d'une pièce avec ou rapporté sur la face intérieure de l'élément linéaire et comportant une structure d'engagement.

Le clip comprend également un manchon d'accrochage indépendant qui présente une ouverture dans laquelle vient s'engager la structure d'engagement de l'élément support. Il se monte par un mouvement de translation perpendiculaire au plan général de l'élément linéaire, dans une ouverture de montage ménagée en regard dans la carrosserie et comportant des moyens de retenue qui coopèrent avec les bords de cette ouverture pour s'opposer au retrait du manchon d'accrochage hors de l'ouverture de montage.

L'élément support et le manchon d'accrochage comportent des moyens complémentaires d'encliquetage constituant une structure d'encliquetage à deux crans conduisant à deux positions stables du clip qui correspondent à deux positions de montage de l'élément linéaire sur la carrosserie, à savoir une position déployée du clip correspondant pour l'élément linéaire à une position écartée de prémontage à distance de la carrosserie et une position rassemblée du clip correspondant pour l'élément linéaire à sa position finale d'utilisation plaquée contre la carrosserie.

Le passage en position rassemblée du clip est obtenu par un mouvement relatif de translation, perpendiculaire au plan général de l'élément linéaire, en rapprochement de l'élément support par rapport au manchon d'accrochage.

Selon une caractéristique essentielle de l'invention, l'élément support et le manchon d'accrochage comportent également des moyens complémentaires de butée qui verrouillent le clip de fixation en position déployée et s'opposent à son passage en position rassemblée, et qui ne l'autorise qu'après un déverrouillage préalable des moyens complémentaires de butée par un mouvement de translation relative de l'élément support par rapport au manchon d'accrochage dans le plan général de l'élément linéaire et préférentiellement selon sa direction longitudinale.

De préférence, le clip de fixation selon l'invention comporte en outre un moyen de maintien en position déployée qui garantit un bon positionnement relatif des moyens complémentaires de butée permettant de verrouiller le clip de fixation en position déployée, tant que le déverrouillage de ces moyens complémentaires de butée n'a pas eu lieu.

Dans une variante préférentielle, le clip à deux positions selon l'invention comporte également un joint annulaire s'étendant autour du manchon d'accrochage, qui garantit l'étanchéité entre la carrosserie et le clip de fixation. Ce joint est préférentiellement réalisé en une matière thermofusible qui fond lors de la montée en température subie pendant la mise en peinture et provoque un collage du manchon d'accrochage à la carrosserie.

L'invention fournit également un élément linéaire décoratif ou fonctionnel, par exemple du type baguette, bande, moulure, enjoliveur de ceinture de caisse ou de bas de caisse, destiné à être rapporté contre et monté sur la carrosserie à peindre d'un véhicule routier notamment du type automobile, qui comporte sur sa face intérieure au moins un clip de fixation à deux positions de maintien selon l'invention.

De préférence, l'élément linéaire comporte sur sa face intérieure deux clips de fixation à deux positions de maintien selon l'invention qui sont disposés chacun à proximité de l'une de ses extrémités, et au moins un autre clip de fixation ne présentant qu'une seule position de maintien dans laquelle il est placé au moyen d'une poussée transversale perpendiculaire au plan général de l'élément linéaire.

Grâce à la conception particulièrement inventive du clip à deux positions selon l'invention, la baguette se monte en position écartée de prémontage à distance de la carrosserie et en position finale d'utilisation plaquée contre la carrosserie, dans les deux cas au moyen d'un effort de poussée transversale à la carrosserie (en Y).

Cependant, les risques d'erreur de l'opérateur sont évités, car le passage de la position écartée de prémontage à la position plaquée finale nécessite un déverrouillage préalable des clips selon l'invention qui est obtenu par un mouvement différent de translation de la baguette préférentiellement selon sa direction longitudinale (en X).

De plus et contrairement au mouvement de coulissement longitudinal« en X » des clips antérieurs, ce déverrouillage ne nécessite qu'un faible effort de la part de l'opérateur car le coulissement relatif se produit uniquement entre les deux parties des clips à deux positions et non entre la carrosserie et l'ensemble des clips de fixation en engagement serré sur celle-ci.

Selon un mode préférentiel de réalisation de l'invention, les clips à deux positions de l'invention sont conçus pour être montés dans les trous pilotes d'indexage du poinçonnage de la carrosserie. En plus de leur fonction principale de fixation de la baguette, ils réalisent alors par leur engagement l'étanchéité de la carrosserie à ce niveau, ce qui évite au constructeur automobile d'avoir à boucher ces trous pilotes lors d'une étape ultérieure du processus.

D'autres caractéristiques et avantages de l'invention apparaîtront à la lecture de la description détaillée qui va suivre, description faite en référence aux dessins annexés, dans lesquels :
- la figure 1 est une vue générale en perspective de la face intérieure d'une baguette équipée de clips de fixation classiques et de deux clips de fixation à deux position selon l'invention ;
- la figure 2 est une vue en perspective éclatée des différents éléments constitutifs d'une première variante de clip de fixation à deux positions selon l'invention ;
- la figure 3 est une vue en perspective du clip de fixation selon la première variante de l'invention, en position déployée ;
- la figure 4 est une vue en perspective du clip de fixation selon la première variante de l'invention, en position rassemblée ;
- la figure 5 est une vue en perspective d'un tronçon de baguette sur lequel est monté l'élément support du clip de fixation selon la première variante de l'invention ;
- la figure 6 est une vue de dessous en perspective du manchon d'accrochage du clip de fixation selon la première variante de l'invention ;
- la figure 7 est une vue en perspective d'un tronçon de baguette sur lequel est moulé d'une pièce l'élément support du clip de fixation selon une deuxième variante de l'invention ;
- la figure 8 est une vue de dessous en perspective du manchon d'accrochage du clip de fixation selon la deuxième variante de l'invention ;
- les figures 9 à 16 sont des vues en coupe transversale et en perspective pour les figures 9, 12 et 14, des sections transversales correspondantes pour les figures 10 et 15 et des vues en coupe longitudinale et en perspective pour les figures 11, 13 et 16, qui illustrent les différentes étapes de montage d'une baguette sur la carrosserie d'un véhicule au moyen d'un clip de fixation à deux positions selon la première variante de l'invention pour les figures 9, 10, 12, 14 et 15 et selon une troisième variante de l'invention pour les figures 11, 13 et 16, ces vues correspondant :
   - pour les figures 9 à 11 : au montage en position déployée du clip de fixation et donc en position écartée de prémontage de la baguette ;
   - pour les figures 12 et 13 : au déverrouillage des moyens complémentaires de butée du clip de fixation ; et
   - pour les figures 14 à 16 : au montage en position rassemblée du clip de fixation et donc en position plaquée d'utilisation de la baguette.

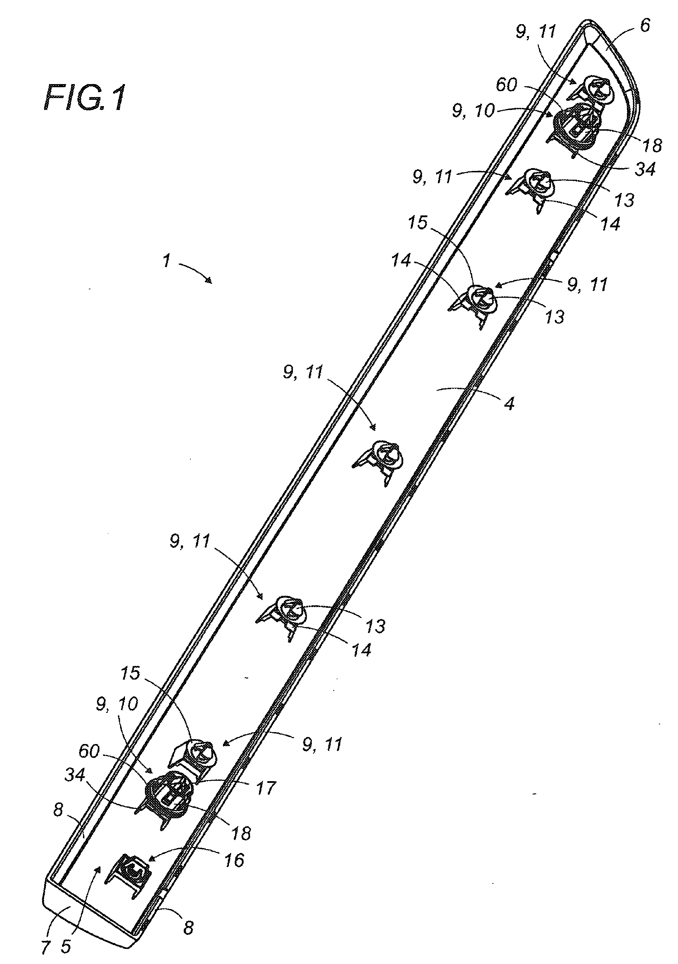

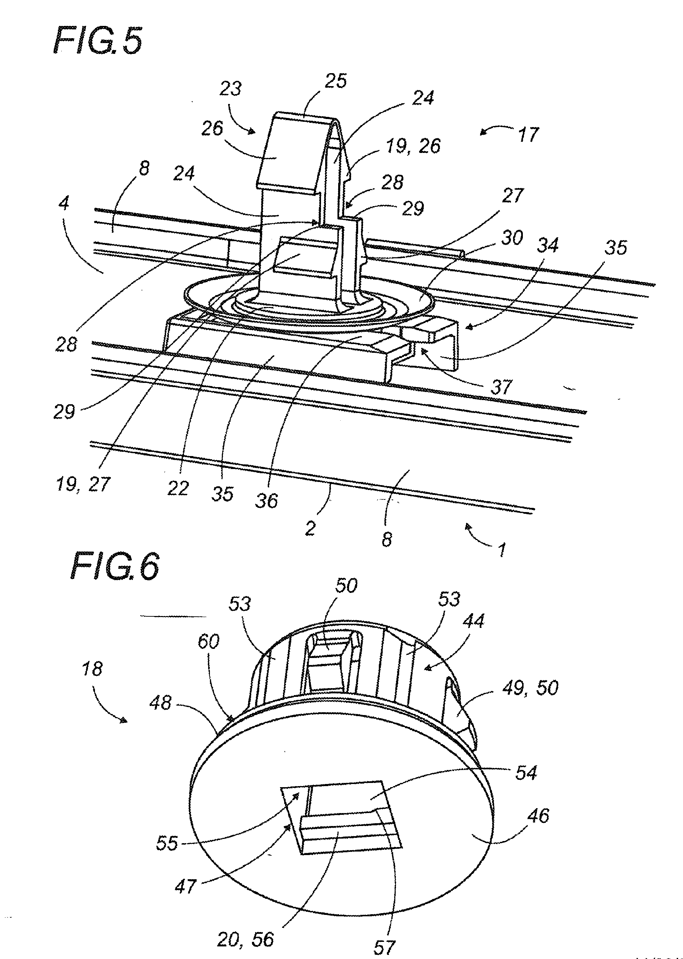

Le clip de fixation à deux positions stables de maintien selon la présente invention va maintenant être décrit de façon détaillée en référence aux figures 1 à 16. Les éléments équivalents représentés sur les différentes figures porteront les mêmes références numériques.

La présente invention se rapporte de façon générale à un élément linéaire à fixer sur la carrosserie d'un véhicule routier avant sa mise en peinture.

Par élément linéaire, on entend plus particulièrement tout élément décoratif et/ou fonctionnel par exemple du type baguette, bande, moulure et autre que l'on fixe sur les portes, les ceintures de caisse, les bas de caisse ou autres parties de la carrosserie d'un véhicule routier. Pour des raisons de commodité on regroupera tous ces objets par le seul terme de baguette.

Sur les différentes figures, on a représenté des clips de fixation et une baguette constituant des modes de réalisation préférentiels de l'invention. Il doit cependant être bien compris que ces figures ainsi que la description détaillée de celles-ci ne sont données qu'à titre d'exemple et ne sont en rien limitatives de la portée de l'invention définie par les revendications. Ainsi, par exemple, les autres clips de fixation de la baguette, qui ne présentent qu'une seule position de maintien, sont de forme quelconque pouvant être différente de celle représentée.

Par convention dans cette description, on définira les notions de haut et de bas, d'inférieur et de supérieur, d'avant et d'arrière, d'horizontal et de vertical, etc... en fonction de l'orientation du clip tel que représenté sur les figures. Il est évident que cette orientation ne sera pas forcément conservée en utilisation.

Un exemple d'une baguette 1 selon l'invention a été représenté sur la figure 1.

Cette baguette 1 est une pièce allongée qui comporte une face extérieure 2, par exemple bombée convexe, visible lorsque la baguette est montée sur une carrosserie 3 et une face intérieure 4, par exemple concave, dirigée vers la carrosserie 3 lorsque la baguette est mise en place.

Le corps de la baguette 1 définit ainsi du côté de sa face intérieure 4 un volume intérieur creux 5 longitudinal, continu et ouvert, délimité par exemple par une paroi avant 6, une paroi arrière 7 et sur les côtés par deux rebords longitudinaux 8 sensiblement verticaux ou obliques selon les exigences de style.

La baguette 1 comporte sur sa face intérieure 4 un ensemble de moyens de fixation 9 permettant de solidariser la baguette 1 à la carrosserie 3.

Sur l'exemple représenté, ces moyens de fixation 9 se composent de clips de fixation à deux positions de maintien 10 selon l'invention et d'une série de clips de fixation classiques à une seule position de maintien 11.

Pour assurer le montage et la fixation de la baguette 1 sur la carrosserie 3, ces clips de fixation 10 et 11 sont conçus pour coopérer avec une série d'ouvertures de montage 12 prévues en regard dans la tôle de la carrosserie 3, notamment au niveau des portes ou des bas de caisse.

La baguette 1 comporte de préférence deux clips de fixation à deux positions de maintien 10, disposés chacun à proximité de l'une des extrémités de la baguette. Cependant, suivant les modèles de baguette et les possibilités d'ouverture de montage dans la carrosserie, ces clips de fixation 10 peuvent être en nombre différent et disposés différemment.

Ces clips de fixation à deux positions 10 peuvent être plus nombreux, par exemple avec une baguette de grande longueur, ou lorsque l'on souhaite un maintien réparti et/ou renforcé de la baguette en position écartée de prémontage, notamment si la baguette doit être prémontée sur la carrosserie avant traitement par cataphorèse.

Il est également envisageable que l'ensemble des moyens de fixation 9, qui équipent la face intérieure 4 de la baguette 1, soient des clips de fixation à deux positions de maintien 10 selon l'invention.

En plus des deux clips de fixation à deux positions 10, la baguette 1 représentée comporte six clips de fixation à une seule position de maintien 11. Il s'agit de clips de fixation classiques qui se montent par engagement de leur tête de clip 13 dans une ouverture de montage circulaire de la carrosserie au moyen d'un effort de poussée selon une direction perpendiculaire au plan général de la baguette (en Y).

Ces clips de fixation 11 sont répartis de manière sensiblement uniforme sur toute la longueur de la baguette 1, pour garantir un maintien uniforme et solide de la baguette contre la carrosserie 3 en position plaquée d'utilisation.

Ces clips de fixation 11 peuvent être intégrés, c'est-à-dire moulés d'une pièce avec la face intérieure 4 de la baguette, ou être indépendants et rapportés sur la baguette. Ils peuvent présenter une forme quelconque, existante ou à définir, du moment qu'ils se montent par poussée selon une direction perpendiculaire au plan général de la baguette, lors du passage de la baguette 1 de la position écartée de prémontage à la position plaquée d'utilisation.

Dans le mode de réalisation préférentiel représenté, les clips de fixation à une position de maintien 11 sont des clips rapportés montés sur une structure de base 14 en caisson qui s'élèvent de la face intérieure 4 de la baguette 1. Les clips de fixation 11, montés par encliquetage sur la structure de base 14, comportent une tête de clip 13 en forme de portion de jupe conique et une platine d'étanchéité 15 circulaire à bord périphérique relevé en direction de la carrosserie.

La baguette 1 représentée comporte en outre à l'une de ses extrémités un moyen d'indexation longitudinale 16, également appelé dispositif de fixation positive. Sur l'exemple représenté, il s'agit d'un dispositif de type à « quart de tour ». Néanmoins, tout autre dispositif de fonction équivalente peut être utilisé et par exemple un dispositif d'encliquetage du type marteau, fût, croix, un élément vissé ou tout autre dispositif adapté.

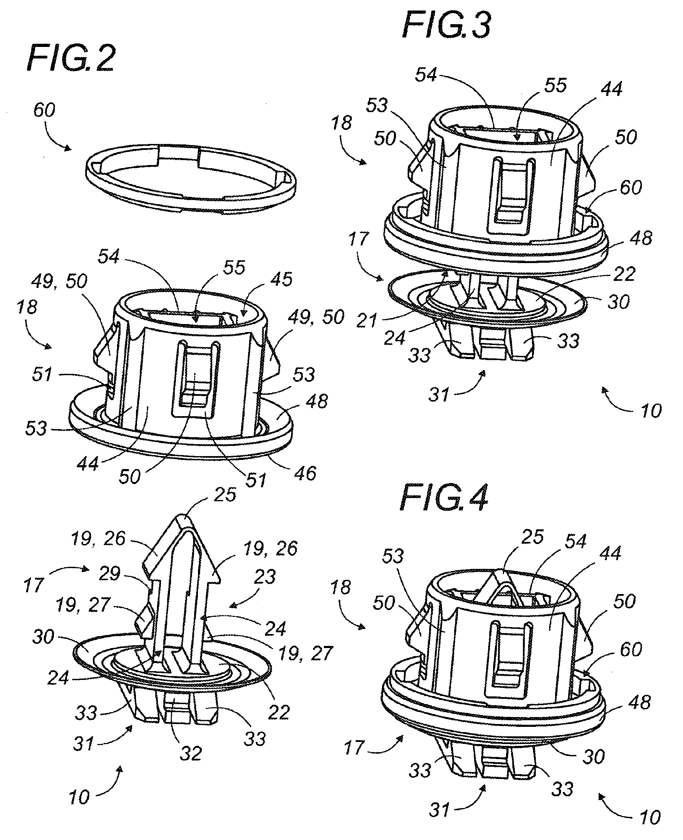

Trois exemples de réalisation du clip de fixation à deux positions de maintien selon l'invention vont maintenant être décrits de façon détaillée en référence aux figures 2 à 16.

Le clip de fixation à deux positions 10 comprend un élément support 17 et un manchon d'accrochage 18 qui comportent chacun des moyens complémentaires d'encliquetage, respectivement 19 et 20, formant ensemble une structure d'encliquetage à deux crans 21 lorsque l'élément support 17 et le manchon d'accrochage 18 sont en prise l'un avec l'autre pour former le clip de fixation 10 selon l'invention.

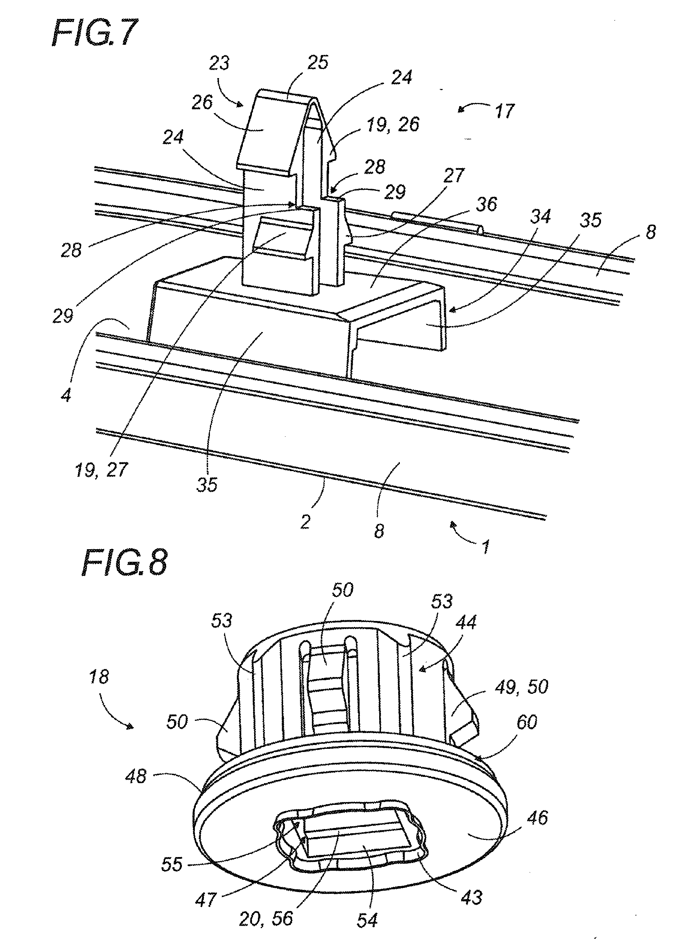

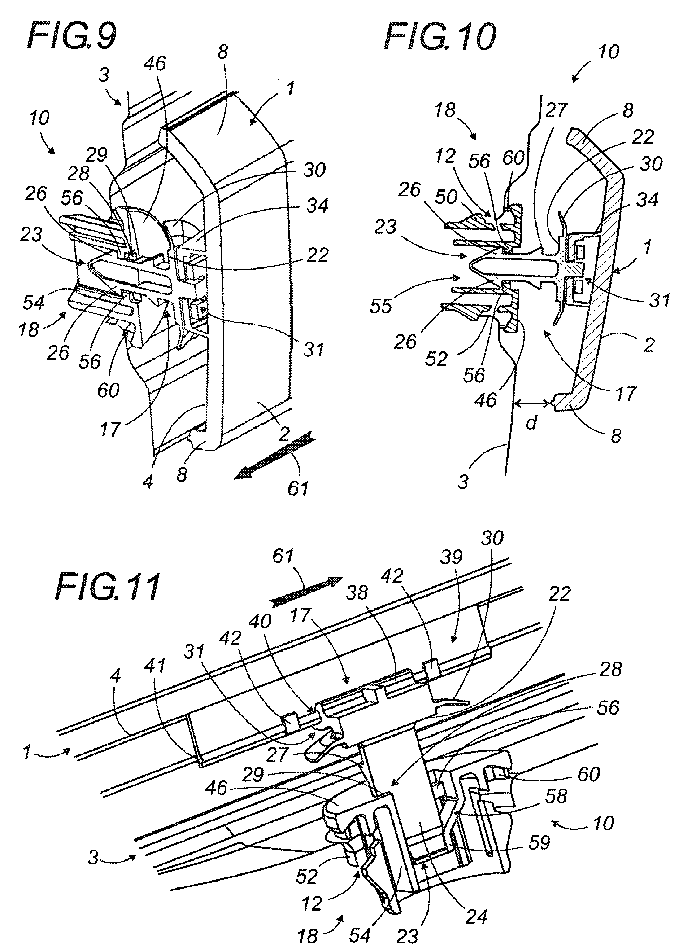

L'élément support 17 est une pièce en matière plastique qui s'élèvent de la face intérieure 4 de la baguette 1. Il peut être moulé d'une seule pièce et d'un seul tenant avec celle-ci dans le cas d'un élément support intégré tel que celui de la figure 7 par exemple, ou être indépendant et préalablement fixé sur la baguette dans le cas d'un élément support rapporté comme par exemple ceux représentés sur les figures 2 à 4 et sur les figures 11, 13 et 16.

Dans la variante des figures 2 à 4, l'élément support 17 rapporté comporte un plateau d'appui 22 préférentiellement circulaire, de la face supérieure duquel s'élève une structure d'engagement 23 prévue pour être engagée à l'intérieur du manchon d'accrochage 18 et qui porte les moyens d'encliquetage 19 de l'élément support 17.

Cette structure d'engagement 23 comporte à une hauteur décalée au moins une conformation saillante d'encliquetage haute 26 et au moins une conformation saillante d'encliquetage basse 27, constituant les moyens d'encliquetage 19 de l'élément support 17 et correspondent chacune à l'un des deux crans de la structure d'encliquetage 21 et donc à l'une des deux positions stables caractéristiques du clip de fixation 10.

La structure d'engagement 23 représentée se présente sous la forme de deux branches verticales 24, de préférence sensiblement planes et parallèles, réunies au niveau de leur extrémité supérieure par un pont de matière 25, chacune des branches verticales 24 comportant une conformation saillante d'encliquetage haute 26 et une conformation saillante d'encliquetage basse 27, préférentiellement triangulaires. La structure d'engagement 23 est ainsi relativement flexible, ce qui facilite son engagement.

De préférence, sur les deux branches verticales 24 les deux conformations saillantes hautes 26 et les deux conformations saillantes basses 27 sont disposées à la même hauteur, mais s'étendent dans des directions opposées, conférant ainsi à la structure d'engagement 23 une forme générale de flèche à double pointe.

A une hauteur intermédiaire entre les conformations saillantes d'encliquetage 26 et 27, la structure d'engagement 23 présente un épaulement 28 dont la paroi inférieure 29 est l'un des moyens complémentaires de butée qui verrouillent le clip de fixation 10 en position déployée comme on l'expliquera par la suite.

L'élément support 17 peut avantageusement comporter un élément d'étanchéité, par exemple sous la forme d'une collerette d'étanchéité 30 à bordure préférentiellement remontante et dirigée vers le manchon d'accrochage 18 qui prolonge le plateau d'appui 22 en périphérie. Cet élément d'étanchéité a pour fonction de réaliser l'étanchéité au niveau de l'ouverture du manchon d'accrochage 18 lorsque le clip se trouve en position rassemblée et par là de s'opposer à l'entrée d'eau et de saletés à l'intérieur de la carrosserie et d'atténuer la transmission des bruits lorsque la baguette 1 est placée en position plaquée finale d'utilisation.

En sous-face du plateau d'appui 22, se trouvent des moyens de fixation 31 de l'élément support 17 à la baguette 1 dans le cas où l'élément support 17 est un élément rapporté ou des moyens de liaison de l'élément support 17 à la baguette 1 dans le cas où l'élément support 17 est un élément intégré.

Sur l'exemple représenté sur les figures 2 à 4, ces moyens de fixation 31 se composent d'une nervure centrale 32 prolongée par deux branches d'encliquetage 33 qui s'étendent en porte-à-faux parallèlement à la nervure centrale et donnent à l'ensemble une forme générale de E.

Ces moyens de fixation 31 coopèrent avec des moyens complémentaires portés par une structure de base en caisson 34, sensiblement parallélépipédique, qui s'élève de la paroi intérieure 4 de la baguette 1 et est moulée d'une pièce avec celle-ci. La structure de base en caisson comporte classiquement deux parois latérales 35, préférentiellement légèrement inclinées et convergentes pour une meilleure stabilité, réunies par une paroi supérieure 36 sensiblement horizontale.

Pour permettre l'engagement de l'élément support 17, la paroi supérieure 36 de la structure de base 34 présente une fente de réception 37 à extrémité ouverte, dans laquelle peut être insérée à coulissement la nervure centrale 33 appartenant aux moyens de fixation 31 de l'élément support 17.

Bien entendu, les moyens de fixation 31 de l'élément support 17, ainsi que la structure complémentaire de base 34 de la baguette 1, tels que décrits ci-dessus ne sont que des exemples préférentiels de réalisation et peuvent être remplacés par tout autre moyen adapté envisageable par l'homme du métier.

Ainsi par exemple, dans la troisième variante du clip selon l'invention représentée sur les figures 11, 13 et 16, les moyens de fixation 31 de l'élément support 17 se présentent sous la forme de deux conformations en tube de coulissement 38, s'étendant le long des côtés longitudinaux de l'élément support 17 sous le plateau d'appui 22.

Ces conformations en tube de coulissement 38 sont destinées à coopérer avec deux tronçons de nervure 39 longitudinaux qui s'élèvent de la face intérieure 4 de la baguette 1 avec laquelle ils sont moulés d'une seule pièce.

Pour cela, les conformations en tube de coulissement 38 sont ouvertes chacune selon une fente longitudinale 40 dont l'ouverture présente des structures longitudinales d'encliquetage de forme complémentaire à celle de la tête 41 des tronçons de nervure 39.

Les tronçons de nervure 39 permettent de maintenir latéralement les clips de fixation 10 tout en autorisant un certain coulissement longitudinal de ceux-ci destiné à autoriser l'allongement de la baguette dû à la dilatation thermique.

Chaque tronçon de nervure 39 comporte en outre deux butoirs 42, préférentiellement constitués de surépaisseurs locales de la tête 41 du tronçon de nervure 39 correspondant, situés de part et d'autre de la zone de montage de l'élément support 17, qui servent de butée d'arrêt à l'élément support 17 en définissant ses positions limites de coulissement.

Dans la variante représentée sur la figure 7, l'élément support 17 est intégré à la baguette 1. Comme dans le premier exemple de réalisation, on retrouve une structure de base en caisson 34 moulée d'une pièce avec la face intérieure 4 de la baguette 1 qui sert de moyen de liaison de l'élément support 17 à la baguette et qui comprend deux parois latérales 35, réunies par une paroi supérieure 36.

Cette paroi supérieure 36 correspond au plateau d'appui 22 des variantes précédentes. Pour des raisons de facilité de démoulage de l'ensemble, elle ne comporte préférentiellement pas de collerette d'étanchéité. Cependant, une telle collerette d'étanchéité peut être avantageusement remplacée par un élément d'étanchéité de même fonction porté par le manchon d'accrochage 18, notamment une jupe d'étanchéité 43 dirigée vers le bas en direction de l'élément support 17.

De la paroi supérieure 36 de la structure de base en caisson 34 s'élève directement la structure d'engagement 23 de l'élément support 17 qui est similaire à celle précédemment décrite pour les variantes rapportées.

Le manchon d'accrochage 18 est une pièce indépendante en matière plastique, creuse et de forme générale préférentiellement cylindrique.

Il comprend une paroi latérale 44 qui définit un volume intérieur creux 45 préférentiellement ouvert en haut et partiellement fermé en bas par une paroi inférieure 46 du manchon d'accrochage 18.

La paroi inférieure 46 du manchon d'accrochage présente une ouverture 47, par exemple rectangulaire, qui permet l'insertion de la structure d'engagement 23 de l'élément support 17 dans le volume intérieur creux 45 du manchon d'accrochage 18.

C'est cette paroi inférieure 46 qui sert de moyen de butée complémentaire à la paroi inférieure 29 de l'épaulement 28 de l'élément support 17 afin de verrouiller le clip de fixation 10 en position déployée.

Selon un mode de réalisation préférentiel de l'invention, la paroi inférieure 46 peut se prolonger radialement au-delà de la paroi latérale 44 et se terminer par un rebord périphérique 48 remontant.

Le manchon d'accrochage 18 est destiné à s'engager dans une ouverture de montage 12 de la carrosserie 3. Il comporte pour cela des moyens de retenue 49 qui coopèrent avec les bords de cette ouverture 12 pour s'opposer au retrait du manchon d'accrochage hors de l'ouverture de montage.

Il s'agit par exemple comme représenté d'ergots d'encliquetage 50, préférentiellement triangulaires et au nombre de quatre régulièrement répartis sur la paroi latérale 44, chacun pouvant s'escamoter de façon élastique dans une découpe 51 correspondante de la paroi latérale 44 pour permettre l'enfoncement du manchon d'accrochage 18 dans l'ouverture de montage 12.

Le manchon d'accrochage 18 représenté est prévu pour coopérer avec une ouverture de montage 12 circulaire et bordée par un bord rentrant 52, comme c'est souvent le cas des trous pilotes d'indexage de la carrosserie. Cependant, le clip de fixation 10 selon l'invention peut parfaitement être utilisé avec des ouvertures de montage planes et sans rebord, les moyens de retenue 49 devant alors simplement être déplacés et/ou adaptés.

De la même façon, dans le cas d'une ouverture de montage 12 de forme non circulaire, la forme de la paroi latérale 44 pourra être adaptée. On peut cependant conserver la forme cylindrique représentée dans le cas d'une ouverture de montage oblongue, le manchon d'accrochage n'étant alors retenu que par deux de ses ergots triangulaires d'encliquetage 50 diamétralement opposés. Une telle ouverture de montage oblongue permet avantageusement un léger coulissement du clip de fixation 10 par rapport à la carrosserie 3 et autorise ainsi à ce niveau une dilatation différentielle de la baguette 1 par rapport à la carrosserie 3.

De préférence, le manchon d'accrochage 18 peut comporter en outre sur la face extérieure de sa paroi latérale 44 un ensemble de nervures de centrage 53 qui permettent avantageusement de ne réaliser qu'un appui limité et quasi-ponctuel du manchon d'accrochage 18 sur la carrosserie 3.

Les bords de l'ouverture 47 se prolongent par une paroi intérieure 54 qui délimite dans le volume intérieur creux 45 un puits central 55 dans lequel vient se loger la structure d'engagement 23 de l'élément support 17 du clip 10, la paroi intérieure 54 constituant pour celle-ci une paroi de guidage et d'appui.

Le moyen d'encliquetage 20 du manchon d'accrochage 18 se trouve dans ce puits central 55. Il s'agit dans les modes de réalisation préférentiels représentés de deux nervures 56, sensiblement horizontales, qui s'étendent en vis-à-vis sur deux faces opposées du puits central. Ces nervures 56 sont conçues pour coopérer successivement avec les conformations saillantes d'encliquetage hautes 26 et basses 27 de la structure d'engagement 23 de l'élément support 17 afin d'obtenir les deux positions stables du clip 10. Elles forment avec les conformations saillantes d'encliquetage 26 et 27 la structure d'encliquetage à deux crans 21.

Selon un mode de réalisation préférentiel de l'invention, l'épaisseur des nervures 56 augmente à l'une de leurs extrémités de manière à former une rampe progressive 57 servant de moyen de maintien en position déployée du clip de fixation comme on l'expliquera plus loin.

Ces rampes progressives 57 peuvent être remplacées ou complétées par une patte flexible 58 à effet ressort, qui prend naissance de la paroi intérieure 54 et s'étend de façon inclinée vers l'intérieur du puits central en s'éloignant de l'ouverture 47. Cette patte flexible 58 s'appuie contre la structure d'engagement 23 de l'élément support 17 lorsque celui-ci est engagé dans le puits central 55 et sert de moyen de maintien en position déployée du clip de fixation.

Sur l'exemple représenté dans lequel le manchon d'accrochage comporte à la fois des nervures 56 et une patte flexible 58, cette dernière prend naissance de l'une des faces du puits central ne comportant pas de nervure 56 et se termine par une extrémité libre 59 destinée à venir porter en appui contre le chant opposé à l'épaulement 28 des branches verticales 24 de l'élément support 17.

Selon un mode de réalisation avantageux, le clip à deux positions 10 de l'invention peut comporter en outre un joint annulaire 60 conçu pour être enfilé autour du manchon d'accrochage 18 et venir reposer contre le rebord périphérique 48 de sa paroi inférieure 46. Un tel joint 60 peut également être, non pas enfilé, mais directement co-moulé simultanément au manchon 18 par une technique de bi-injection.

Lorsque le manchon d'accrochage 18 est engagé dans l'ouverture de montage 12 de la carrosserie, le joint annulaire 60 se retrouve coincé entre la carrosserie et le rebord périphérique 48 du manchon 18 et garantit l'étanchéité entre la carrosserie et le clip de fixation.

Le joint annulaire 60 est préférentiellement réalisé en une matière thermofusible qui fond lors de la montée en température de l'opération de mise en peinture. Il s'agit par exemple d'un cordon de colle dite « hot-melt » dans le jargon de l'homme du métier.

En fondant, le joint annulaire 60 provoque le collage du manchon d'accrochage 18 à la carrosserie 3 garantissant ainsi une fixation solide du manchon d'accrochage 18 à la carrosserie et une étanchéité parfaite à ce niveau.

Par sa présence avantageuse, la paroi intérieure 54 du manchon d'accrochage 18 empêche la colle fondue, pouvant éventuellement passer par les découpes 51, de pénétrer à l'intérieur du puits central 55 et de gêner les déplacements de la structure d'engagement 23 de l'élément support 17.

Le montage de la baguette sur la carrosserie et le fonctionnement du clip de fixation à deux positions 10 selon l'invention vont maintenant être décrits en référence aux figures 9 à 16.

La première étape du montage consiste à assembler le clip de fixation 10 sur la baguette 1. Pour cela, on commence par fixer l'élément support 17 à la face intérieure 4 de la baguette dans le cas d'un élément support 17 rapporté. Puis, on engage le manchon d'accrochage 18, autour duquel on a de préférence préalablement enfilé ou co-moulé le joint annulaire 60, sur l'élément support 17 pour placer le clip de fixation 10 en position déployée.

Pour cela, on insère la structure d'engagement 23 de l'élément support 17 à travers l'ouverture 47 du manchon d'accrochage 18, puis on l'enfonce dans le puits central 55 jusqu'à ce que les conformations saillantes d'encliquetage hautes 26 de l'élément support 17 se trouvent en prise avec les nervures internes 56 du manchon d'accrochage 18.

Pendant cet enfoncement, la patte flexible 58 vient appuyer sur le chant des branches verticales 24 opposé à l'épaulement 28 et provoque un décalage de la structure d'engagement 23 vers le côté du puits central 55 opposé à la patte flexible 58.

Lorsque les conformations saillantes d'encliquetage hautes 26 de l'élément support 17 sont engagées avec les nervures 56 du manchon d'accrochage 18, le clip se trouve en position déployée qui est sa première position stable de maintien.

Dans cette position, la paroi inférieure 29 de l'épaulement 28 de la structure d'engagement 23 se trouve en contact de butée avec la paroi inférieure 46 du manchon d'accrochage 18. Ces moyens complémentaires de butée s'opposent à un enfoncement supplémentaire de la structure d'engagement 23 dans le puits central 55 et verrouillent ainsi le clip de fixation 10 en position déployée.

La baguette 1 est maintenant prête à être montée sur la carrosserie 3. On procède pour cela en plaçant les clips de fixation 10 en face de leur ouverture de montage 12 respective, qui peuvent avantageusement être les trous pilotes de la carrosserie, et en engageant les manchons d'accrochage 18 des clips de fixation 10 dans ces ouvertures 12 par un mouvement de translation perpendiculaire au plan général de la baguette obtenu par un effort de poussée « en Y » de l'opérateur sur la baguette, jusqu'à ce que les ergots triangulaires d'encliquetage 50 ou autres moyens de retenue 49 du manchon 18 se trouvent en prise avec les bords 52 de l'ouverture 12.

Le clip de fixation 10 et la baguette 1 se trouvent alors dans la configuration représentée sur les figures 9 à 11. Le clip de fixation 10 est en position déployée et la baguette 1 en position stable écartée de prémontage. Dans cette position, le corps de la baguette 1 est éloigné de la carrosserie d'une distance d (figure 10) qui permet de procéder sans gêne à la mise en peinture de la carrosserie 3 et de la baguette 1.

Lors du transport et de la manipulation de la baguette équipée de ses clips de fixation 10, puis pendant l'opération de mise en peinture, le maintien en position déployée du clip de fixation 10 est garanti d'une part par les moyens complémentaires de butée 29 et 46 du clip et d'autre part par la rampe 57 et/ou la patte flexible 58 à effet ressort qui continue d'appuyer sur le chant des branches verticales 24.

Une fois les opérations de peinture terminées, l'opérateur doit placer la baguette en position finale d'utilisation plaquée contre la carrosserie en faisant passer les clips de fixation 10 en position rassemblée.

Il doit préalablement procéder au déverrouillage des moyens complémentaires de butée 29 et 46. Pour cela, il déplace la baguette dans ce cas selon sa direction longitudinale dans le sens de la flèche 61 (figures 9 et 11), ce qui provoque un mouvement de translation relative de l'élément support 17 par rapport au manchon d'accrochage 18 retenu dans l'ouverture de la carrosserie 3.

Par ce déplacement, l'opérateur décale la structure d'engagement 23 par rapport à l'ouverture 47 du manchon afin que la paroi inférieure 29 des branches verticales 24 ne soit plus en butée contre la paroi inférieure 46 du manchon et que la structure d'engagement 23 fasse entièrement face à l'ouverture 47 du manchon 18.

Ce déplacement de déverrouillage, nécessite cependant un petit effort de la part de l'opérateur qui doit lutter contre l'effet ressort de la patte flexible 58 pour la repousser en périphérie du puits central 55 et/ou faire suivre la rampe progressive 57 aux conformations saillantes hautes d'encliquetage 26. La nécessité d'un tel effort pour le déverrouillage limite les risques de passage involontaire en position rassemblée du clip en cas de vibrations ou d'erreurs de manipulation de l'opérateur.

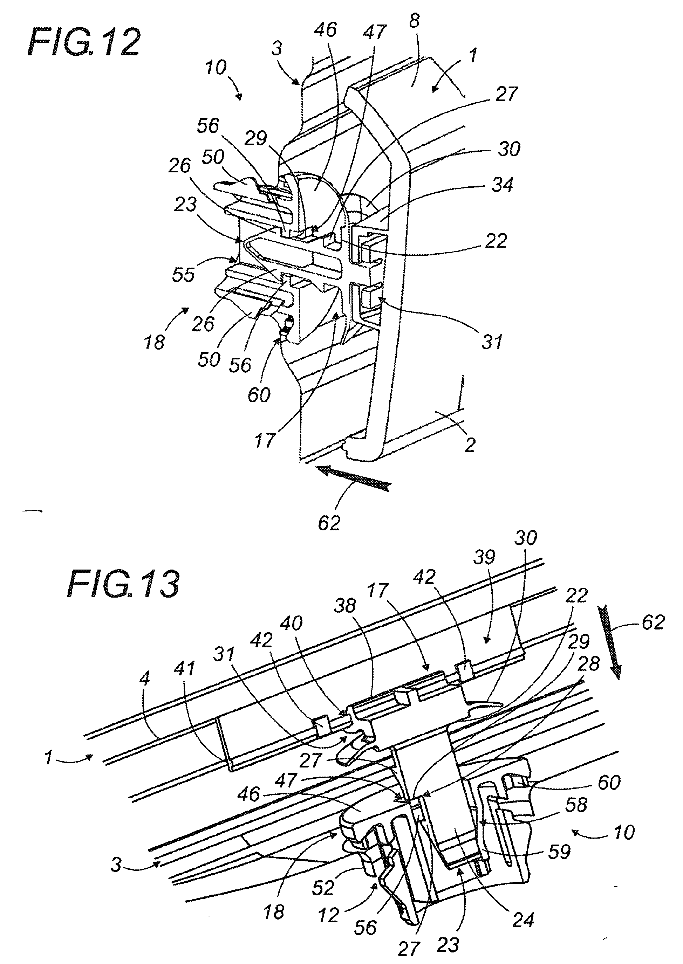

Le clip de fixation 10 et la baguette 1 se trouvent alors dans la configuration intermédiaire non stable représentée sur les figures 12 et 13.

Pour faire passer les clips de fixation 10 en position rassemblée qui correspond à la deuxième position stable du clip, il suffit d'enfoncer la structure d'engagement 23 de l'élément support 17 plus profondément dans le manchon d'accrochage 18 jusqu'à ce que les conformations saillantes basses d'encliquetage 27 viennent s'engager à leur tour avec les nervures internes 56 du manchon d'accrochage 18. L'opérateur doit pour cela exercer sur la baguette 1 un effort de poussée « en Y » perpendiculaire au plan général de la baguette, c'est-à-dire dans le sens de la flèche 62 des figures 12 et 13.

Avantageusement pendant de ce mouvement, les autres clips de fixation 11 à une seule position de maintien qui équipent également la baguette s'engagent simultanément dans leurs ouvertures de montage respectives.

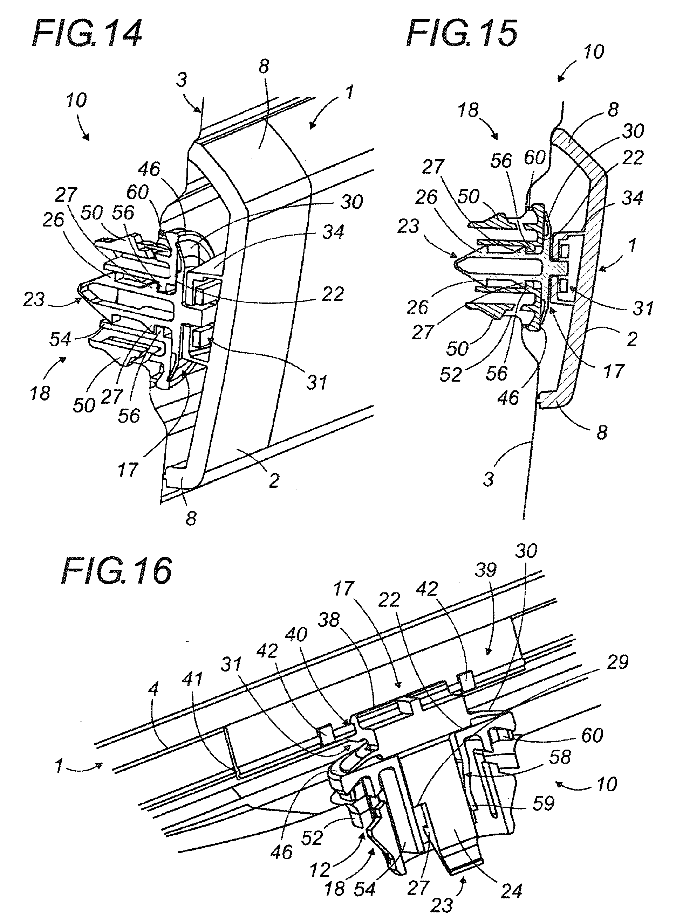

Les clips de fixation 10 selon l'invention se trouvent alors en position rassemblée comme représenté sur les figures 14 à 16. Dans cette position, le plateau d'appui 22 de l'élément support 17 est plaqué contre la paroi inférieure 46 du manchon d'accrochage 18 et l'étanchéité est réalisée à ce niveau selon les variantes par la collerette d'étanchéité 30 ou par la jupe d'étanchéité 43 qui vient s'écraser contre respectivement la paroi inférieure 46 du manchon d'accrochage 18 ou le plateau d'appui 22 de l'élément support 17.

Comme on peut le voir sur ces figures, la baguette 1 est alors en position plaquée finale d'utilisation, dans laquelle elle est en appui par ses rebords longitudinaux 8 contre la carrosserie 3.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Clip de fixation à deux positions de maintien (10), destiné à assurer la fixation sur la carrosserie (3) à peindre d'un véhicule routier notamment du type automobile, d'un élément linéaire (1) décoratif ou fonctionnel, par exemple du type baguette, bande, moulure, enjoliveur de ceinture de caisse ou de bas de caisse, clip comprenant :
- un élément support (17) se trouvant sur la face intérieure (4) de l'élément linéaire (1) et comportant une structure d'engagement (23) ; et
- un manchon d'accrochage (18) indépendant qui présente une ouverture (47) dans laquelle vient s'engager la structure d'engagement (23) de l'élément support (17), ce manchon d'accrochage (18) se montant dans une ouverture de montage (12) ménagée en regard dans la carrosserie (3) et comportant des moyens de retenue (49) qui coopèrent avec les bords (52) de cette ouverture (12) pour s'opposer au retrait du manchon d'accrochage (18) hors de l'ouverture de montage (12) ;
l'élément support (17) et le manchon d'accrochage (18) comportant des moyens complémentaires d'encliquetage (19, 20) constituant une structure d'encliquetage à deux crans (21) conduisant à deux positions stables du clip de fixation (10) qui correspondent à deux positions de montage de l'élément linéaire (1) sur la carrosserie (3), à savoir une position déployée du clip de fixation (10) correspondant pour l'élément linéaire (1) à une position écartée de prémontage à distance de la carrosserie (3) et une position rassemblée du clip de fixation (10) correspondant pour l'élément linéaire (10) à sa position finale d'utilisation plaquée contre la carrosserie (3), le passage en position rassemblée du clip de fixation (10) étant obtenu par un mouvement relatif de translation, perpendiculaire au plan général de l'élément linéaire (1), en rapprochement de l'élément support (17) par rapport au manchon d'accrochage (18) ;
clip de fixation **caractérisé en ce que** l'élément support (17) est moulé d'une pièce avec ou rapporté sur la face intérieure (4) de l'élément linéaire (1) ;
**en ce que** le manchon d'accrochage (18) se monte dans l'ouverture de montage (12) de la carrosserie (3) par un mouvement de translation perpendiculaire au plan général de l'élément linéaire (1) ; et
**en ce que** l'élément support (17) et le manchon d'accrochage (18) comportent des moyens complémentaires de butée (29, 46) qui verrouillent le clip de fixation (10) en position déployée et s'opposent à son passage en position rassemblée, et qui ne l'autorisent qu'après un déverrouillage préalable des moyens complémentaires de butée (29, 46) par un mouvement de translation relative de l'élément support (17) par rapport au manchon d'accrochage (18) dans le plan général de l'élément linéaire (1).

2. Clip de fixation à deux positions de maintien (10) selon la revendication précédente **caractérisé en ce qu'**il comporte en outre un moyen de maintien en position déployée (57, 58) qui garantit un bon positionnement relatif des moyens complémentaires de butée (29, 46) permettant de verrouiller le clip de fixation (10) en position déployée, tant que le déverrouillage de ces moyens complémentaires de butée (29, 46) n'a pas eu lieu.

3. Clip de fixation à deux positions de maintien (10) selon l'une quelconque des revendications précédentes **caractérisé en ce que** l'élément support (17) comprend un plateau d'appui (22) de la face supérieure duquel s'élève la structure d'engagement (23) et sous lequel se trouvent des moyens de fixation (31) ou de liaison (34) de l'élément support (17) à la face intérieure (4) de l'élément linéaire (1).

4. Clip de fixation à deux positions de maintien (10) selon l'une quelconque des revendications précédentes **caractérisé en ce que** la structure d'engagement (23) comporte à une hauteur décalée au moins une conformation saillante d'encliquetage haute (26) et au moins une conformation saillante d'encliquetage basse (27), constituant les moyens d'encliquetage (19) de l'élément support (17).

5. Clip de fixation à deux positions de maintien (10) selon la revendication précédente **caractérisé en ce que** la structure d'engagement (23) présente, à une hauteur intermédiaire entre les conformations saillantes d'encliquetage haute (26) et basse (27), un épaulement (28) dont la paroi inférieure (29) est l'un des moyens complémentaires de butée (29, 46) qui verrouillent le clip de fixation (10) en position déployée.

6. Clip de fixation à deux positions de maintien (10) selon l'une quelconque des revendications précédentes **caractérisé en ce que** le manchon d'accrochage (18) comprend une paroi latérale (44) qui définit un volume intérieur creux (45) partiellement fermé en bas par une paroi inférieure (46) dans laquelle est ménagée l'ouverture (47).

7. Clip de fixation à deux positions de maintien (10) selon la revendication précédente **caractérisé en ce que** la paroi inférieure (46) se prolonge radialement au-delà de la paroi latérale (44) et se termine par un rebord périphérique (48) remontant.

8. Clip de fixation à deux positions de maintien (10) selon la revendication 6 ou 7 **caractérisé en ce que** les moyens de retenue (49) du manchon d'accrochage (18) sont formés d'ergots d'encliquetage (50) pouvant s'escamoter de façon élastique dans des découpes (51) de la paroi latérale (44) ; et **en ce que** la paroi latérale (44) comporte sur sa face extérieure un ensemble de nervures de centrage (53) permettant de ne réaliser qu'un appui limité du manchon d'accrochage (18) sur la carrosserie (3).

9. Clip de fixation à deux positions de maintien (10) selon l'une quelconque des revendications précédentes **caractérisé en ce que** les bords de l'ouverture (47) se prolongent par une paroi intérieure (54) qui délimite dans le volume intérieur (45) du manchon d'accrochage (18) un puits central (55) dans lequel vient se loger la structure d'engagement (23) de l'élément support (17).

10. Clip de fixation à deux positions de maintien (10) selon la revendication précédente **caractérisé en ce que** les moyens d'encliquetage (20) du manchon d'accrochage (18) sont deux nervures (56) sensiblement horizontales, s'étendant en vis-à-vis sur deux faces opposées du puits central (55).

11. Clip de fixation à deux positions de maintien (10) selon les revendications 2 et 10 **caractérisé en ce que** l'épaisseur des nervures (56) augmente à l'une de leurs extrémités de manière à former une rampe progressive (57) servant de moyen de maintien en position déployée du clip de fixation.

12. Clip de fixation à deux positions de maintien (10) selon les revendications 2 et 9 **caractérisé en ce que** le manchon d'accrochage (18) comporte une patte flexible (58) à effet ressort, qui prend naissance de la paroi intérieure (54) et s'étend de façon inclinée à l'intérieur du puits central (55) en s'éloignant de l'ouverture (47), cette patte flexible (58) s'appuyant contre la structure d'engagement (23) de l'élément support (17) lorsque celui-ci est engagé dans le puits central (55) et servant de moyen de maintien en position déployée du clip de fixation.

13. Clip de fixation à deux positions de maintien (10) selon l'une quelconque des revendications précédentes **caractérisé en ce qu'**il comporte en outre un élément d'étanchéité (30, 43) appartenant à l'élément support (17) ou au manchon d'accrochage (18) et réalisant l'étanchéité au niveau de l'ouverture (47) lorsque le clip de fixation (10) est en position rassemblée.

14. Clip de fixation à deux positions de maintien (10) selon l'une quelconque des revendications précédentes **caractérisé en ce qu'**il comporte en outre un joint annulaire (60) qui s'étend autour du manchon d'accrochage (18) et qui garantit l'étanchéité entre la carrosserie (3) et le clip de fixation (10).

15. Elément linéaire (1) décoratif ou fonctionnel, par exemple du type baguette, bande, moulure, enjoliveur de ceinture de caisse ou de bas de caisse, destiné à être rapporté contre et monté sur la carrosserie (3) à peindre d'un véhicule routier notamment du type automobile, **caractérisé en ce qu'**il comporte sur sa face intérieure au moins un clip de fixation à deux positions de maintien (10) selon l'une quelconque des revendications précédentes.

## Claims

1. Attachment clip with two retaining positions (10), for ensuring the fastening on the bodywork (3) to be painted of a road vehicle, in particular of the automobile type, of a functional or decorative linear element (1), for instance a stick, band, rail, waistline or underbody decorative trim, the clip comprising:
a supporting element (17) on the inner face (4) of the linear element (1) including an insertion structure (23); and
an independent hooking coupler (18) which presents an opening (47) in which the insertion structure (23) of the supporting element (17) engages, this hooking coupler (18) being mounted in an assembly opening (12) realized opposite to it in the bodywork (3) and including retaining means (49) which cooperate with the edges (52) of this opening (12) to prevent the retraction of the hooking coupler (18) out of the assembly opening (12);
the supporting element (17) and the hooking coupler (18) including complementary detent means (19, 20) forming a detent structure with two teeth (21) leading to two stable positions of the attachment clip (10) which correspond to two assembly positions of the linear element (1) on the bodywork (3),
namely a spread position of the attachment clip (10) corresponding, for the linear element (1), to a pre-assembly spread position distanced from the bodywork (3) and an assembled position of the attachment clip (10) corresponding, for the linear element (10), to its final position of use pressed against the bodywork (3),
the passage into assembled position of the attachment clip (10) being obtained by a relative translation movement perpendicular to the general plane of the linear element (1), approaching the supporting element (17) in relation to the hooking coupler (18); attachment clip **characterized in that** the supporting element (17) is moulded in one piece with or applied on the inner face (4) of the linear element (1); **in that** the hooking coupler (18) is mounted in the assembly opening (12) of the bodywork (3) by a translatory motion perpendicular to the general plane of the linear element (1); and
**in that** the supporting element (17) and the hooking coupler (18) include complementary abutting means (29, 46) which lock the attachment clip (10) in spread position and prevent its passage into assembled position, and which allow it only after unlocking the complementary abutting means (29, 46) by a relative translatory motion of the supporting element (17) in relation to the hooking coupler (18) in the general plane of the linear element (1).

2. Attachment clip with two retaining positions (10) according to the previous claim **characterized in that** it furthermore includes a maintenance means in spread position (57, 58) which ensures a good relative positioning of the complementary abutting means (29, 46) allowing to lock the fastening clip (10) in spread position, as long as the unlocking of these complementary abutting means (29, 46) has not taken place.

3. Attachment clip with two retaining positions (10) according to any of the preceding claims **characterized in that** the supporting element (17) includes a support plate (22) for the upper face from which the insertion structure (23) rises and under which there are means for fastening (31) or connecting (34) the supporting element (17) on the inner face (4) of the linear element (1).

4. Attachment clip with two retaining positions (10) according to any of the preceding claims **characterized in that** the insertion structure (23) includes, at a staggered height, at least one high detent nose (26) and at least one low detent nose (27), forming the detent means (19) of the supporting element (17).

5. Attachment clip with two retaining positions (10) according to the previous claim **characterized in that** the insertion structure (23) presents, at an intermediate height between the high (26) and low (27) detent nose, a shoulder (28) whose lower wall (29) is one of the complementary abutting means (29, 46) which lock the attachment clip (10) in spread position.

6. Attachment clip with two retaining positions (10) according to any of the preceding claims **characterized in that** the hooking coupler (18) includes a side wall (44) which defines a hollow inner volume (45) partially closed at the bottom by a lower wall (46) in which there is the opening (47).

7. Attachment clip with two retaining positions (10) according to the previous claim 30 **characterized in that** the lower wall (46) prolongs radially beyond the side wall (44) and terminates by a rising peripheral ledge (48).

8. Attachment clip with two retaining positions (10) according to claim 6 or 7 **characterized in that** the retaining means (49) for the hooking coupler (18) are formed by detent lugs (50) being able to disappear in an elastic way in cuts (51) of the side wall (44); and **in that** the side wall (44) includes, on its external side, a centring rib unit (53) allowing to realize only a limited support of the hooking coupler (18) on the bodywork (3).

9. Attachment clip with two retaining positions (10) according to any of the preceding claims **characterized in that** the edges of the opening (47) prolong by an inner wall (54) which in the inner volume (45) of the hooking coupler (18) delimits a central shaft (55) in which the insertion structure (23) of the supporting element (17) is housed.

10. Attachment clip with two retaining positions (10) according to the previous claim **characterized in that** the detent means (20) for the hooking coupler (18) are two essentially horizontal ribs (56), extending on two opposed sides of the central shaft (55).

11. Attachment clip with two retaining positions (10) according to claims 2 and 10 **characterized in that** the thickness of the ribs (56) increases towards one of their ends in order to form a progressive ramp (57) serving as maintenance means in opened-out position of the attachment clip.

12. Attachment clip with two retaining positions (10) according to claims 2 and 9 **characterized in that** the hooking coupler (18) includes a flexible lug (58) with spring effect, which begins at the inner wall (54) and extends in an inclined way inside the central shaft (55) by moving awaying from the opening (47), this flexible lug (58) resting against the insertion structure (23) of the supporting element (17) when the latter is inserted into the central shaft (55) and serves as maintenance means in opened-out position of the attachment clip.

13. Attachment clip with two retaining positions (10) according to any of the preceding claims **characterized in that** it furthermore includes a sealing element (30, 43) belonging to the supporting element (17) or to the hooking coupler (18) and realizing the sealing at the opening (47) when the attachment clip (10) is in assembled position.

14. Attachment clip with two retaining positions (10) according to any of the preceding claims **characterized in that** it furthermore includes an annular joint (60) which extends around the hooking coupler (18) and which ensures the sealing between the bodywork (3) and the attachment clip (10).

15. Functional or decorative linear element (1), for instance of the type stick, tape, rail, waistline or underbody trim, destined to be pressed against and mounted on the bodywork (3) to be painted of a road vehicle in particular of the automobile type, **characterized in that** it includes, on its inner side, at least one attachment clip with two retaining positions (10) according to any of the preceding claims.

## Patentansprüche

1. Clip zum Fixieren an zwei Haltepositionen (10) zur Befestigung, an der anzulackierenden Karosserie (3) eines Straßenfahrzeugs, vor allem von der Art eines Personenkraftwagens, eines linearen Zier- oder Funktionselements (1), zum Beispiel Stab, Band, Leiste, Zierblende für die Karosserie-Gürtellinie oder den Unterboden, wobei der Clip folgendes umfasst:
• Ein Stützelement (17) auf der Innenseite (4) der Leiste (1) mit einer Einführungsstruktur (23); und
• eine unabhängige Ankupplungsmuffe (18), die eine Öffnung (47) aufweist, in die die Einführungsstruktur (23) des Stützelements (17) eingreift; diese Ankupplungsmuffe (18) wird in einer Montageöffnung (12) gegenüberliegend in der Karosserie (3) montiert mit Halteelementen (49), die mit den Rändern (52) dieser Öffnung (12) zusammenwirken, um dem Rückzug der Ankupplungsmuffe (18) aus der Montageöffnung (12) entgegenzuwirken;
das Stützelement (17) und die Ankupplungsmuffe (18) weisen komplementäre Rastmittel (19, 20) auf, die eine Raststruktur mit zwei Rastkerben (21) bilden, die zu zwei stabilen Positionen des Befestigungsclips (10) führen, die zwei Montagepositionen der Leiste (1) auf der Karosserie (3) entsprechen, nämlich eine auseinandergeklappte Position des Befestigungsclips (10), die für die Leiste (1) einer geöffneten Vormontagelage beabstandet von der Karosserie (3) entspricht, und einer zusammengeklappten Position des Befestigungsclips (10), die für die Leiste (10) ihrer Benutzungsendlage entspricht, gegen die Karosserie (3) gepresst, wobei der Übergang in die zusammengeklappte Position des Befestigungsclips (10) durch eine relative Verschiebungsbewegung senkrecht zur allgemeinen Ebene der Leiste (1) erhalten wird, hin zu dem Stützelement (17) im Verhältnis zu der Ankupplungsmuffe (18);
Befestigungsclip **gekennzeichnet dadurch ,dass** das Stützelement (17) einstückig geformt mit der Innenseite (4) der Leiste (1) oder daran angebaut ist;
**dadurch** dass die Ankupplungsmuffe (18) in der Montageöffnung (12) der Karosserie (3) montiert wird, durch eine Verschiebungsbewegung senkrecht zur allgemeinen Ebene der Leiste (1); und
**dadurch**, dass das Stützelement (17) und die Ankupplungsmuffe (18) komplementäre Anschlagmittel (29, 46) enthalten, die den Befestigungsclip (10) in auseinandergeklappter Position verriegeln und seinen Übergang in die zusammengeklappte Position verhindern, und die letzteren erst nach einer vorhergehenden Entriegelung der komplementären Anschlagmittel (29, 46) durch eine relative Verschiebungsbewegung des Stützelements (17) im Verhältnis zu der Ankupplungsmuffe (18) in der allgemeine Ebene der Leiste (1) gestatten.

2. Befestigungsclip mit zwei Haltepositionen (10) nach dem vorherigen Anspruch, **gekennzeichnet dadurch, dass** er außerdem ein Mittel zur Beibehaltung in auseinandergeklappter Position (57, 58) umfasst, das eine gute relative Positionierung der komplementären Anschlagmittel (29, 46) garantiert, wodurch es möglich wird, den Befestigungsclip (10) in auseinandergeklappter Position zu verriegeln, solange die Entriegelung dieser komplementären Anschlagmittel (29, 46) nicht erfolgt ist.

3. Befestigungsclip mit zwei Haltepositionen (10) nach einem beliebigen der vorherigen Ansprüche, **gekennzeichnet dadurch, dass** das Stützelement (17) eine Auflageplatte (22) für die Oberseite umfasst, von der sich die Einführungsstruktur (23) erhebt und unter der sich Mittel zur Befestigung (31) oder Mittel zur Verbindung (34) des Stützelements (17) mit der Innenseite (4) der Leiste (1) befinden.

4. Befestigungsclip mit zwei Haltepositionen (10) nach einem beliebigen der vorherigen Ansprüche, **gekennzeichnet dadurch, dass** die Einführungsstruktur (23) auf einer versetzten Höhe mindestens einen hohen Rastvorsprung (26) und mindestens einen niedrigen Rastvorsprung (27) umfasst, die die Rastmittel (19) des Stützelements (17) bilden.

5. Befestigungsclip mit zwei Haltepositionen (10) nach dem vorherigen Anspruch, **gekennzeichnet dadurch, dass** die Einführungsstruktur (23) auf einer Höhe Vermittler zwischen dem hohen (26) und dem niedrigen (27) Rastvorsprung einen Ansatz (28) aufweist, dessen untere Wand (29) eines der komplementären Anschlagmittel (29, 46) ist, die den Befestigungsclip (10) in auseinandergeklappter Position verriegeln.

6. Befestigungsclip mit zwei Haltepositionen (10) nach einem beliebigen der vorherigen Ansprüche, **gekennzeichnet dadurch, dass** die Ankupplungsmuffe (18) eine Seitenwand (44) umfasst, die ein hohles Innenvolumen (45) definiert, das teilweise unten durch eine untere Wand (46) verschlossen ist, in der die Öffnung (47) angebracht ist.

7. Befestigungsclip mit zwei Haltepositionen (10) nach dem vorherigen Anspruch, **gekennzeichnet dadurch dass** die untere Wand (46) sich radial über die Seitenwand (44) hinaus verlängert und mit einem ansteigenden peripheren Rand (48) endet.

8. Befestigungsclip mit zwei Haltepositionen (10) nach Anspruch 6 oder 7, **gekennzeichnet dadurch, dass** die Halteelemente (49) der Ankupplungsmuffe (18) von Raststiften (50) gebildet werden, die elastisch in Ausschnitten (51) der Seitenwand (44) versinken können, sowie **dadurch**, dass die Seitenwand (44) an ihrer Außenseite eine Gruppe von Zentrierungsrippen (53) umfasst, wodurch es möglich wird, nur eine begrenzte Auflage der Ankupplungsmuffe (18) auf der Karosserie (3) zu verwirklichen.

9. Befestigungsclip mit zwei Haltepositionen (10) nach einem beliebigen der vorherigen Ansprüche, **gekennzeichnet dadurch, dass** die Ränder der Öffnung (47) sich durch eine Innenwand (54) verlängern, die in dem Innenvolumen (45) der Ankupplungsmuffe (18) einen zentralen Schacht (55) begrenzt, in dem die Einführungsstruktur (23) des Stützelements (17) untergebracht ist.

10. Befestigungsclip mit zwei Haltepositionen (10) nach dem vorherigen Anspruch, **gekennzeichnet dadurch, dass** die Rastmittel (20) der Ankupplungsmuffe (18) zwei im wesentlichen waagrechte Rippen (56) sind, die sich einander gegenüber an zwei gegenüberliegenden Seiten des zentralen Schachts (55) erstrecken.

11. Befestigungsclip mit zwei Haltepositionen (10) nach den Ansprüchen 2 und 10, **gekennzeichnet dadurch, dass** die Dicke der Rippen (56) an einem ihrer Enden zunimmt, um eine Rampe mit zunehmender Steigung (57) zu bilden, die als Mittel zur Beibehaltung des Befestigungsclips in auseinandergeklappter Position dient.

12. Befestigungsclip mit zwei Haltepositionen (10) nach den Ansprüchen 2 und 9, **gekennzeichnet dadurch, dass** die Ankupplungsmuffe (18) eine flexible Lasche (58) mit Federwirkung umfasst, die an der Innenwand (54) beginnt und sich schräg im Innern des zentralen Schachts (55) erstreckt, wobei sie sich von der Öffnung entfernt (47), wobei diese flexible Lasche (58) sich gegen die Einführungsstruktur (23) des Stützelements (17) stützt, wenn diese in den zentralen Schacht (55) eingeführt wird, und als Mittel zur Beibehaltung des Befestigungsclips in auseinandergeklappter Position dient.

13. Befestigungsclip mit zwei Haltepositionen (10) nach einem beliebigen der vorherigen Ansprüche, **gekennzeichnet dadurch, dass** er außerdem ein Dichtigkeitselement (30, 43) umfasst, das zum Stützelement (17) oder zur Ankupplungsmuffe (18) gehört und die Dichtigkeit auf Höhe der Öffnung (47) herstellt, wenn der Befestigungsclip (10) in zusammengeklappter Position ist.

14. Befestigungsclip mit zwei Haltepositionen (10) nach einem beliebigen der vorherigen Ansprüche, **gekennzeichnet dadurch, dass** er außerdem eine ringförmige Dichtung (60) umfasst, die sich um die Ankupplungsmuffe (18) erstreckt und die die Dichtigkeit zwischen der Karosserie (3) und der Befestigungsclip (10) sicherstellt.

15. Zier- oder Funktionsleiste (1), zum Beispiel Stab, Band, Leiste, Zierblende, für die Karosserie-Gürtellinie oder den Unterboden, dazu bestimmt, an der anzulackierenden Karosserie (3) eines Straßenfahrzeugs angebracht und montiert zu werden, vor allem von der Art eines Personenkraftwagens, **gekennzeichnet dadurch, dass** sie an ihrer Innenseite mindestens einen Befestigungsclip mit zwei Haltepositionen (10) nach einem beliebigen der vorherigen Ansprüche umfasst.
